# EUROPEAN PATENT APPLICATION

(11) **EP 3 748 461 A1**
(43) Date of publication of application: **09.12.2020**
(21) Application number: 19915580.5
(22) Date of filing: 10.04.2019

(54) **MANUFACTURING METHOD FOR LEAD IN TOUCH SCREEN, TOUCH SCREEN, AND ELECTRONIC DEVICE**

(71) Applicant: Shenzhen Goodix Technology Co., Ltd., Shenzhen, Guangdong 518045 (CN)
(72) Inventor: SHI, Haibiao, Shenzhen, Guangdong 518045 (CN)
(74) Representative: Sticht, Andreas
(86) International application number: PCT/CN2019/082143
(87) International publication number: WO 2020/206644

(57) **Abstract**

The present disclosure provides a method for manufacturing leads in a touch screen, a touch screen, and an electronic device. The method includes: integrally printing a region where an ITO channel pattern lead of the touch screen is disposed; and lasering, by a laser process, the integrally printed region to form at least one of a sensing channel lead or a drive channel lead with a wiring width less than a predetermined threshold, wherein the predetermined threshold is defined according to a minimum value achievable by the laser process. According to the present disclosure, the wiring width of the at least one of the sensing channel lead or the drive channel lead is reduced, and false trigger of the touch screen caused thereby is prevented.

## Description

### TECHNICAL FIELD

The present disclosure relates to the technical field of touch sensing, and in particular, relates to a method for manufacturing leads in a touch screen, a touch screen, and an electronic device.

### BACKGROUND

With the development of touch control technologies and mobile terminal technologies, more and more mobile terminals achieve man-machine interactions by means of touch control. With respect to touch screens, touch input operations may be performed by using active pens or passive pens instead of fingers, in addition to direct touch operations by using the fingers. The principle of the active pen is that the touch screen receives a signal sent by the active pen via a coupled capacitor.

The touch screen generates touch information and senses the specific touch position according to the touch operation of the finger, the active pen, or the passive pen. The touch screen generally includes a display region (view area, VA) including at least one of a sensing channel or a drive channel, and a non-display region including at least one of a sensing channel lead or a drive channel lead. The display region is configured to be triggered by the finger, the active pen, or the passive pen to generate the touch information. The non-display region shall not be triggered by the finger, the active pen, or the passive pen to generate the touch information. The active pen triggers the at least one of the sensing channel lead or the drive channel lead of the non-display region of the touch screen. As a result, the probability of occurrence of false touches (at least one of the sensing channel or the drive channel is falsely triggered) in the display region is greater than the case of the finger or the passive pen.

Therefore, it is a technical problem to be solved urgently in the related art on how to prevent the leads in the non-display region are falsely triggered.

### SUMMARY

The present disclosure is intended to provide a method for manufacturing leads in a touch screen, a touch screen, and an electronic device, such that a wiring width of at least one of a sensing channel lead or a drive channel lead is reduced, and false trigger of the touch screen caused thereby is prevented.

The present disclosure provides a method for manufacturing leads in a touch screen. The method includes: integrally printing a region where an ITO channel pattern lead of the touch screen is disposed; and lasering, by a laser process, the integrally printed region to form at least one of a sensing channel lead or a drive channel lead with a wiring width less than a predetermined threshold, the predetermined threshold being defined according to a minimum value achievable by the laser process.

The present disclosure further provides a touch screen. The touch screen includes at least one of a sensing channel lead or a drive channel lead configured to transmit a touch position signal. The at least one of the sensing channel lead or the drive channel lead is at least one of a sensing channel lead or a drive channel lead with a wiring width less than a predetermined threshold, the at least one of the sensing channel lead or the drive channel lead with the wiring width less than the predetermined threshold is formed by integrally printing a region where an ITO channel pattern lead of the touch screen is disposed and lasering the integrally printed region by a laser process. The predetermined threshold is defined according to a minimum value achievable by the laser process.

The present disclosure further provides an electronic device. The electronic device includes the touch screen as described above.

In the above technical solutions according to embodiments of the present disclosure, a region where an ITO channel pattern lead of the touch screen is disposed is integrally printed; and the integrally printed region is lasered by a laser process to at least one of a sensing channel lead or a drive channel lead with a wiring width less than a predetermined threshold. The predetermined threshold is defined according to a minimum value achievable by the laser process. Therefore, according to the embodiments of the present disclosure, the wiring width of the at least one of the sensing channel lead or the drive channel lead is reduced. When an active pen is in contact with a non-display region, chances that the active pen is in contact with the at least one of the sensing channel lead or the drive channel lead may be reduced. In this way, the risks of occurrence of false touches in a display region are lowered, and the false trigger of the touch screen caused thereby is prevented.

### BRIEF DESCRIPTION OF THE DRAWINGS

Some specific embodiments of the present disclosure are described in detail hereinafter in an exemplary fashion instead of a non-limiting fashion with reference to the accompanying drawings. In the drawings, like reference numerals denote like or similar parts or elements. A person skilled in the art should understand that these drawings may not be necessarily drawn to scale. Among the drawings:
FIG. 1a and FIG.1b are schematic diagrams of a lead laser process of a touch screen in the related art;
FIG. 2 is a flowchart of a method for manufacturing leads in a touch screen according to a first embodiment of the present disclosure;
FIG. 3 is a schematic diagram of step S101 of integrally printing by using a silver paste in the method for manufacturing leads in a touch screen according to the first embodiment of the present disclosure;
FIG. 4 is a flowchart of implementation of step S102 in the method for manufacturing leads in a touch screen according to a second embodiment of the present disclosure;
FIG. 5 is a schematic diagram of lasering a signal channel lead by using a first laser pattern in step S102 in the method for manufacturing leads in a touch screen according to the first embodiment of the present disclosure;
FIG. 6 is another flowchart of implementation of step S102 in the method for manufacturing leads in a touch screen according to the second embodiment of the present disclosure;
FIG. 7 is a schematic diagram of breaking excess metal blocks generated by the integral printing and separating the broken metal blocks from at least one of a sensing channel or a drive channel in the method for manufacturing leads in a touch screen according to the second embodiment of the present disclosure;
FIG. 8 is a schematic diagram of a minimum wiring width of the lead in the method for manufacturing leads in a touch screen according to the second embodiment of the present disclosure;
FIG. 9 is a schematic diagram of a suspended metal block in the method for manufacturing leads in a touch screen according to the second embodiment of the present disclosure; and
FIG. 10 is another schematic diagram of a suspended metal block in the method for manufacturing leads in a touch screen according to the second embodiment of the present disclosure.

### DETAILED DESCRIPTIONOF EMBODIMENTS

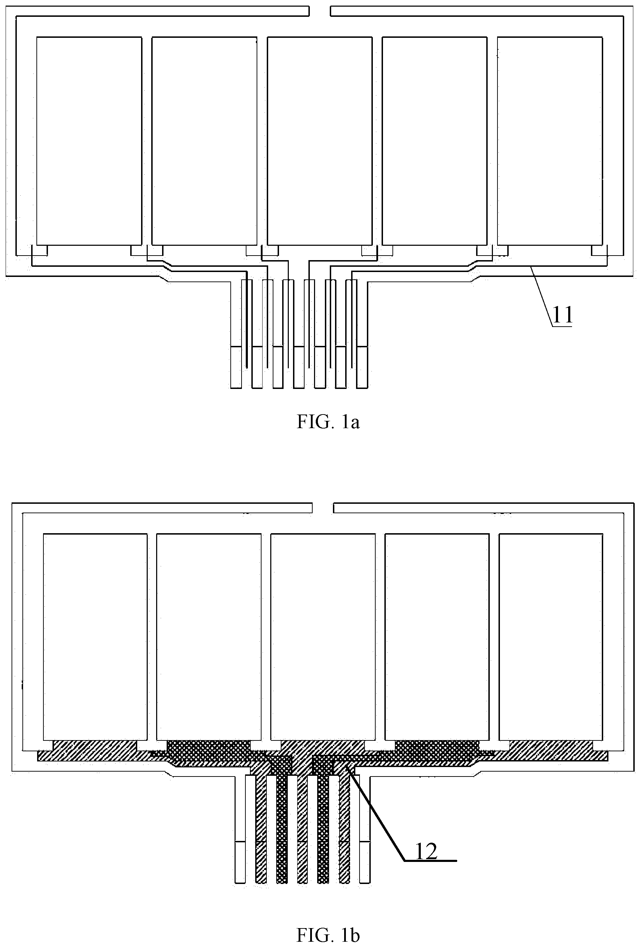

Referring to FIG. 1a and FIG. 1b, at least one of a sensing channel lead or a drive channel lead 11 in a touch screen is lasered by a conventional laser printing process (for example, a GFF laser printing process) to form at least one of a sensing channel lead or a drive channel lead 12. Generally, due to restrictions of the printing process, a wiring width of the at least one of the sensing channel lead or the drive channel lead is made large, and a residue of a large area metal channel is caused. During operating the touch screen by using an active pen, the active pen taps a non-display region of the touch screen, since the wiring width of the at least one of the sensing channel lead or the drive channel lead is large and the active pen taps the at least one of the sensing channel lead or the drive channel lead, false trigger of the touch position in the display region is caused. As a result, false touches occur, and user experience on the touch screen is degraded.

According to an embodiment of the present disclosure, a region where an ITO channel pattern lead of the touch screen is disposed is integrally printed; and the integrally printed region is lasered by a laser process to form at least one of a sensing channel lead or a drive channel lead with a wiring width less than a predetermined threshold. The predetermined threshold is defined according to a minimum value achievable by the laser process. Therefore, according to the embodiments of the present disclosure, the wiring width of the at least one of the sensing channel lead or the drive channel lead is reduced. When an active pen is in contact with a non-display region, chances that the active pen is in contact with the at least one of the sensing channel lead or the drive channel lead may be reduced. In this way, the risks of occurrence of false touches in a display region are lowered, and the false trigger of the touch screen caused thereby is prevented.

Nevertheless, it is not necessary to require that any technical solution according to the embodiments of the present disclosure achieves all of the above technical effects.

For better understanding of the technical solutions according to the embodiments of the present disclosure by a person skilled in the art, the technical solutions according to the present disclosure are clearly and completely described with reference to the accompanying drawings of the embodiments of the present disclosure. Apparently, the described embodiments are only a part of embodiments of the present disclosure, rather than the entire embodiments. Based on the embodiments of the present disclosure, all other embodiments derived by persons of ordinary skill in the art without any creative efforts shall fall within the protection scope of the present disclosure.

Specific implementations of the present disclosure are further described hereinafter with reference to the drawings of the present disclosure.

### First Embodiment

An embodiment of the present disclosure provides a method for manufacturing leads in a touch screen based on application of an active pen.

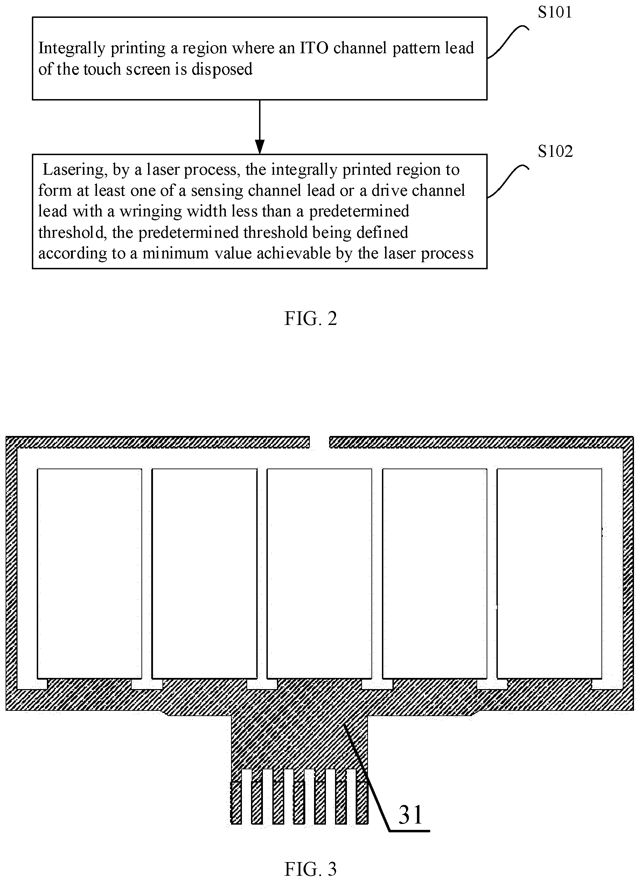

Referring to FIG. 2, the method includes the following steps:
In step S101, a region where an ITO channel pattern lead of the touch screen is disposed is integrally printed.

Specifically, the touch screen is a glass+film+film (GFF) touch screen. However, the touch screen according to the present disclosure is not limited to the GFF touch screen, and instead any touch screen manufactured by the laser process may apply in the present disclosure.

In still another specific embodiment of the present disclosure, step S101 specifically includes:
integrally printing the region where the ITO channel pattern lead of the touch screen is disposed by using a silver paste.

Referring to FIG. 1b, since the conventional GFF laser process respectively lasers and prints the ITO channel pattern lead of the touch screen, the wiring width of the at least one of the sensing channel lead or the drive channel lead 12 is overlarge, and especially the width at a wiring corner is overlarge.

Referring to FIG. 3, according to the embodiment of the present disclosure, a region 31 where the ITO channel pattern lead of the touch screen is disposed is integrally printed by using the silver paste, instead of respectively lasering and printing the channel pattern lead 12 only as illustrated in FIG. 1b.

To be specific, the sliver paste is prepared by silver or a compound thereof, a flux, a binder, and a diluent.

In step S102, the integrally printed region is lasered by a laser process to form at least one of a sensing channel lead or a drive channel lead with a wiring width less than a predetermined threshold. The predetermined threshold is defined according to a minimum value achievable by the laser process.

The predetermined threshold is defined by a person skilled in the art according to the minimum value achievable by the laser process.

Specifically, the predetermined threshold is 0.1 mm. In this way, the at least one of the sensing channel lead or the drive channel lead is smaller than the wiring width of the at least one of the sensing channel lead or the drive channel lead 12 obtained in the way as illustrated in FIG. 1b.

Therefore, according to the embodiment of the present disclosure, the wiring width of the at least one of the sensing channel lead or the drive channel lead is made as small as possible, such that the active pen may not be in contact with the at least one of the sensing channel lead or the drive channel lead when touching the non-display region. Therefore, the display region of the touch screen may not be subject to false touches due to false trigger of the at least one of the sensing channel lead or the drive channel lead corresponding to at least one of a sensing channel or a drive channel. In this way, false trigger of the touch screen is prevented.

According to an embodiment of the present disclosure, a region where an ITO channel pattern lead of the touch screen is disposed is integrally printed; and the integrally printed region is lasered by a laser process to form at least one of a sensing channel lead or a drive channel lead with a wiring width less than a predetermined threshold. The predetermined threshold is defined according to a minimum value achievable by the laser process. Therefore, according to the embodiments of the present disclosure, the wiring width of the at least one of the sensing channel lead or the drive channel lead is reduced. When an active pen is in contact with a non-display region, chances that the active pen is in contact with the at least one of the sensing channel lead or the drive channel lead may be reduced. In this way, the risks of occurrence of false touches in a display region are lowered, and the false trigger of the touch screen caused thereby is prevented.

### Second Embodiment

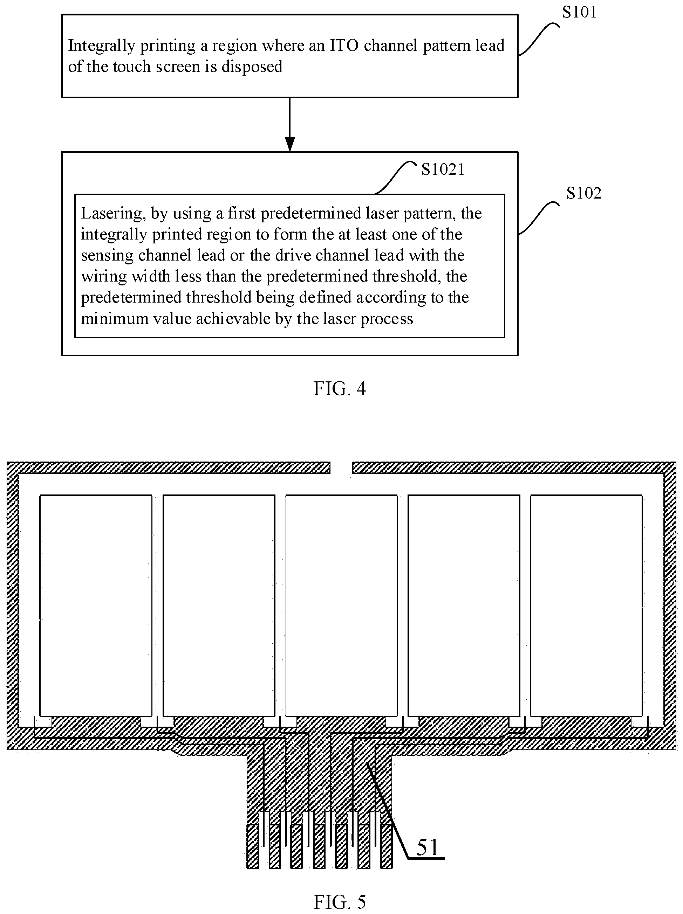

In addition to step S101 and step S102, in a specific embodiment of the present disclosure, referring to FIG. 4, step S102 includes the following sub-steps:
In S1021, the integrally printed region is lasered by using a first predetermined laser pattern to form the at least one of the sensing channel lead or the drive channel lead with the wiring width less than the predetermined threshold. The predetermined threshold is defined according to the minimum value achievable by the laser process.

The first laser pattern is a laser pattern that may make the wiring width even smaller, for example, a circular shape, a rectangular shape, or any other suitable polygonal shape.

Referring to FIG. 5, the integrally printed region is lasered by using a first predetermined laser pattern to form at least one of a sensing channel lead or a drive channel lead 51 with a wiring width less than the predetermined threshold.

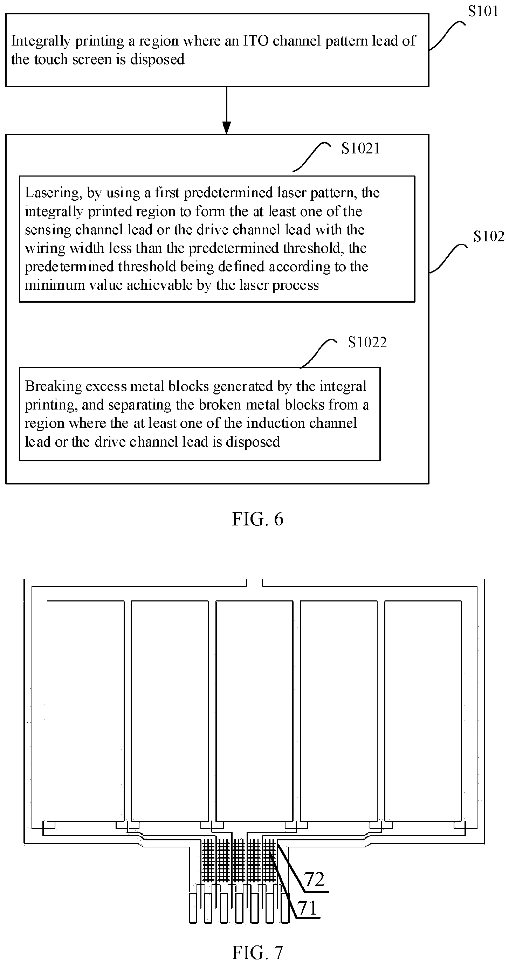

In another specific embodiment of the present disclosure, referring to FIG. 6, step S102 further includes the following sub-steps:
In S1022, excess metal blocks generated by the integral printing are broken, and the broken metal blocks are separated from a region where the at least one of the sensing channel lead or the drive channel lead is disposed.

In the present disclosure, the sequence of performing sub-step S1021 and sub-step S1022 is not limited. To be specific, sub-step S1021 may be performed prior to sub-step S1022, or performed upon sub-step S1022.

In still another specific embodiment of the present disclosure, sub-step S1022 specifically includes:
by using a second predetermined laser pattern, breaking the excess metal blocks generated by the integral printing, and separating the broken metal blocks from the region where the at least one of the sensing channel lead or the drive channel lead is disposed. As schematically illustrated in FIG. 7, excess metal blocks 71 are separated from the region where the at least one of the sensing channel lead or the drive channel lead is disposed. In this way, false trigger of the touch screen caused by connection between the excess large-area metal blocks and the at least one of the sensing channel lead or the drive channel lead is prevented.

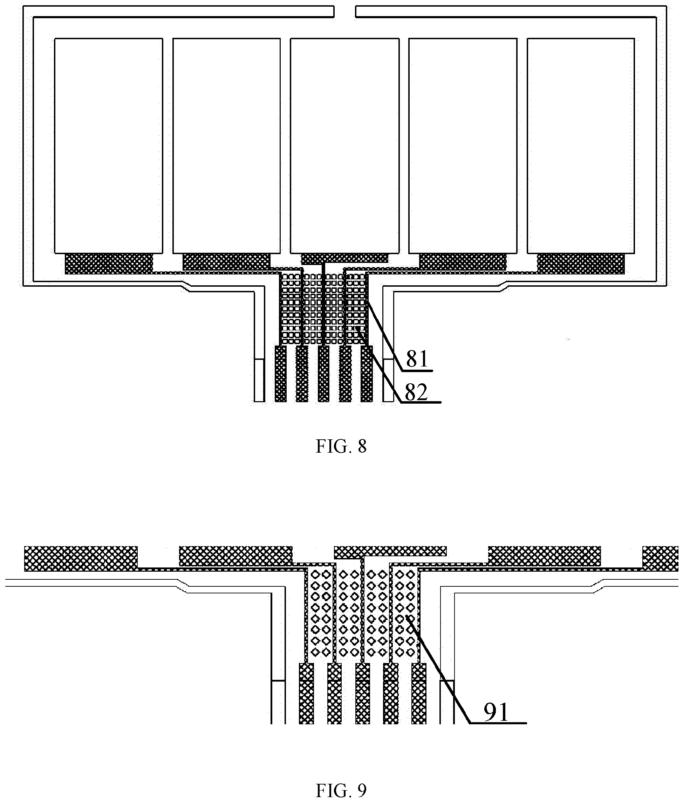

Referring to FIG. 8, excess metal blocks 82 generated by the integral printing are broken and the broken metal blocks are separated from the region where the at least one of the sensing channel lead or the drive channel lead is disposed to form at least one of a sensing channel lead or a drive channel lead 81 with a minimum wiring width. As compared with the at least one of the sensing channel lead or the drive channel lead 12 as illustrated in FIG. 1b, the wiring width of the at least one sensing channel lead or the drive channel lead 81 as illustrated in FIG. 8 is much smaller.

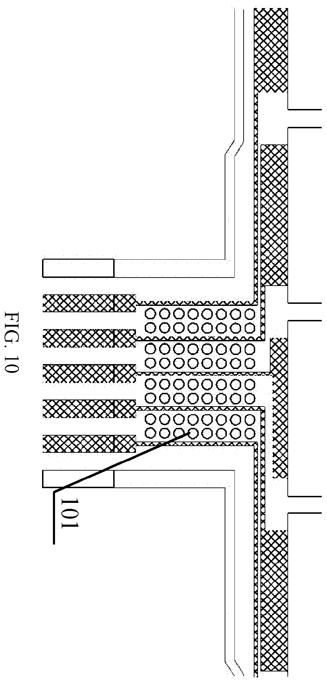

According to the embodiment of the present disclosure, excess large-area metal blocks are broken and the broken small metal blocks are separated from the region where the at least one of the sensing channel lead or the drive channel lead is disposed to form suspended metal blocks. The suspended metal blocks may be square blocks, rectangle blocks, or rhombus blocks, for example, rhombus metal blocks 91 as illustrated in FIG. 9. The suspended metal blocks may also be circular suspended metal blocks 101 as illustrated in FIG. 10.

The first laser pattern and the second laser pattern may be the same pattern or different patterns.

According to the embodiment of the present disclosure, the shape of the suspended metal blocks, and the size and arrangement spacing between the suspended metal blocks are not limited.

According to an embodiment of the present disclosure, a region where an ITO channel pattern lead of the touch screen is disposed is integrally printed; and the integrally printed region is lasered by a laser process to form at least one of a sensing channel lead or a drive channel lead with a wiring width less than a predetermined threshold. The predetermined threshold is defined according to a minimum value achievable by the laser process. Therefore, according to the embodiments of the present disclosure, the wiring width of the at least one of the sensing channel lead or the drive channel lead is reduced. When an active pen is in contact with a non-display region, chances that the active pen is in contact with the at least one of the sensing channel lead or the drive channel lead may be reduced. In this way, the risks of occurrence of false touches in a display region are lowered, and the false trigger of the touch screen caused thereby is prevented.

### Third Embodiment

An embodiment of the present disclosure provides a touch screen. The touch screen includes at least one of a sensing channel lead or a drive channel lead configured to transmit a touch position signal. The at least one of the sensing channel lead or the drive channel lead is at least one of a sensing channel lead or a drive channel lead with a wiring width less than a predetermined threshold, the at least one of the sensing channel lead or the drive channel lead with the wiring width less than the predetermined threshold is formed by integrally printing a region where an ITO channel pattern lead of the touch screen is disposed and lasering the integrally printed region by a laser process. The predetermined threshold is defined according to a minimum value achievable by the laser process.

Specifically, the touch screen is a glass+film+film (GFF) touch screen. However, the touch screen according to the present disclosure is not limited to the GFF touch screen, and instead any touch screen manufactured by the laser process may apply in the present disclosure.

In a specific embodiment of the present disclosure, integrally printing a region where an ITO channel pattern lead of the touch screen is disposed specifically includes:
integrally printing the region where the ITO channel pattern lead of the touch screen is disposed by using a silver paste.

Referring to FIG. 1b, since the conventional GFF laser process respectively lasers and prints the ITO channel pattern lead of the touch screen, the wiring width of the at least one of the sensing channel lead or the drive channel lead 12 is overlarge, and especially the width at a wiring corner is overlarge.

Referring to FIG. 3, according to the embodiment of the present disclosure, a region 31 where the ITO channel pattern lead of the touch screen is disposed is integrally printed by using the silver paste, instead of respectively lasering and printing the channel pattern lead 12 only as illustrated in FIG. 1b.

To be specific, the sliver paste is prepared by silver or a compound thereof, a flux, a binder, and a diluent.

The predetermined threshold is defined by a person skilled in the art according to the minimum value achievable by the laser process.

Specifically, the predetermined threshold is 0.1 mm. In this way, the at least one of the sensing channel lead or the drive channel lead is smaller than the wiring width of the at least one of the sensing channel lead or the drive channel lead 12 obtained in the way as illustrated in FIG. 1b.

Therefore, according to the embodiment of the present disclosure, the wiring width of the at least one of the sensing channel lead or the drive channel lead is made as small as possible, such that the active pen may not be in contact with the at least one of the sensing channel lead or the drive channel lead when touching the non-display region. Therefore, the display region of the touch screen may not be subject to false touches due to false trigger of the at least one of the sensing channel lead or the drive channel lead corresponding to at least one of a sensing channel or a drive channel. In this way, false trigger of the touch screen is prevented.

According to an embodiment of the present disclosure, a region where an ITO channel pattern lead of the touch screen is disposed is integrally printed; and the integrally printed region is lasered by a laser process to form at least one of a sensing channel lead or a drive channel lead with a wiring width less than a predetermined threshold. The predetermined threshold is defined according to a minimum value achievable by the laser process. Therefore, according to the embodiments of the present disclosure, the wiring width of the at least one of the sensing channel lead or the drive channel lead is reduced. When an active pen is in contact with a non-display region, chances that the active pen is in contact with the at least one of the sensing channel lead or the drive channel lead may be reduced. In this way, the risks of occurrence of false touches in a display region are lowered, and the false trigger of the touch screen caused thereby is prevented.

### Fourth Embodiment

In addition to the above touch screen structure, in a specific embodiment of the present disclosure, lasering, by the laser process, the integrally printed region to form the at least one of the sensing channel lead or the drive channel lead with the wiring width less than the predetermined threshold, the predetermined threshold being defined according to a minimum value achievable by the laser process, includes:

lasering, by using a first predetermined laser pattern, the integrally printed region to form the at least one of the sensing channel lead or the drive channel lead with the wiring width less than the predetermined threshold, where the predetermined threshold is defined according to the minimum value achievable by the laser process.

The first laser pattern is a laser pattern that may make the wiring width even smaller, for example, a circular shape, a rectangular shape, or any other suitable polygonal shape.

Referring to FIG. 5, at least one of a sensing channel lead or a drive channel lead 51 with a wiring width less than the predetermined threshold is lasered by using the first predetermined laser pattern.

In another specific embodiment of the present disclosure, lasering, by the laser process, the integrally printed region to form at least one of the sensing channel lead or the drive channel lead with the wiring width less than the predetermined threshold, the predetermined threshold being defined according to a minimum value achievable by the laser process, further includes:
breaking excess metal blocks generated by the integral printing, and separating the broken metal blocks from a region where the at least one of the sensing channel lead or the drive channel lead is disposed.

The present disclosure sets no limitation to the sequence of lasering, by using the first predetermined laser pattern, the integrally printed region to form the at least one of the sensing channel lead or the drive channel lead with the wiring width less than the predetermined threshold, and breaking the excess metal blocks generated by the integral printing, and separating the broken metal blocks from the region where the at least one of the sensing channel lead or the drive channel lead is disposed. To be specific, lasering, by using the first predetermined laser pattern, the integrally printed region to form the at least one of the sensing channel lead or the drive channel lead with the wiring width less than the predetermined threshold may be performed prior to breaking the excess metal blocks generated by the integral printing, and separating the broken metal blocks from the region where the at least one of the sensing channel lead or the drive channel lead is disposed, or performed upon breaking the excess metal blocks generated by the integral printing, and separating the broken metal blocks from the region where the at least one of the sensing channel lead or the drive channel lead is disposed.

In still another specific embodiment of the present disclosure, breaking the excess metal blocks generated by the integral printing, and separating the broken metal blocks from a region where the at least one of the sensing channel lead or the drive channel lead is disposed specifically include:
breaking, by using a second predetermined laser pattern, the excess metal blocks generated by the integral printing, and separating the broken metal blocks from the region where the at least one of the sensing channel or the drive channel is disposed. As schematically illustrated in FIG. 7, excess metal blocks 71 are separated from the at least one of the sensing channel or the drive channel to form at least one of a sensing channel lead or a drive channel lead 72.

Referring to FIG. 8, excess metal blocks 82 generated by the integral printing are broken and the broken metal blocks are separated from the region where the at least one of the sensing channel lead or the drive channel lead is disposed to form at least one of a sensing channel lead or a drive channel lead 81 with a minimum wiring width. As compared with the at least one of the sensing channel lead or the drive channel lead 12 as illustrated in FIG. 1b, the wiring width of the at least one sensing channel lead or the drive channel lead 81 as illustrated in FIG. 8 is much smaller.

According to the embodiment of the present disclosure, excess large-area metal blocks are broken and the broken small metal blocks are separated from the region where the at least one of the sensing channel lead or the drive channel lead is disposed to form suspended metal blocks. The suspended metal blocks may be square blocks, rectangle blocks, or rhombus blocks, for example, rhombus metal blocks 91 as illustrated in FIG. 9. The suspended metal blocks may also be circular suspended metal blocks 101 as illustrated in FIG. 10.

The first laser pattern and the second laser pattern may be the same pattern or different patterns.

According to the embodiment of the present disclosure, the shape of the suspended metal blocks, and the size and arrangement spacing between the suspended metal blocks are not limited.

According to an embodiment of the present disclosure, a region where an ITO channel pattern lead of the touch screen is disposed is integrally printed; and the integrally printed region is lasered by a laser process to form at least one of a sensing channel lead or a drive channel lead with a wiring width less than a predetermined threshold. The predetermined threshold is defined according to a minimum value achievable by the laser process. Therefore, according to the embodiments of the present disclosure, the wiring width of at least one of the sensing channel lead or the drive channel lead is reduced. When an active pen is in contact with a non-display region, chances that the active pen is in contact with the at least one of the sensing channel lead or the drive channel lead may be reduced. In this way, the risks of occurrence of false touches in a display region are lowered, and the false trigger of the touch screen caused thereby is prevented.

An embodiment of the present disclosure provides an electronic device including the touch screen as described above.

The electronic device according to the embodiment of the present disclosure is practiced in various forms, including, but not limited to:
(1) a mobile communication device: which has the mobile communication function and is intended to provide mainly voice and data communications; such terminals include: a smart phone (for example, an iPhone), a multimedia mobile phone, a functional mobile phone, a low-end mobile phone and the like;
(2) an ultra mobile personal computer device: which pertains to the category of personal computers and has the computing and processing functions, and additionally has the mobile Internet access feature; such terminals include: a PDA, a MID, a UMPC device and the like, for example, an iPad;
(3) a portable entertainment device: which displays and plays multimedia content; such devices include: an audio or video player (for example, an iPod), a palm game machine, an electronic book, and a smart toy, and a portable vehicle-mounted navigation device;
(4) a server: which provides services for computers, and includes a processor 810, a hard disk, a memory, a system bus and the like; the server is similar to the general computer in terms of architecture; however, since more reliable services need to be provided, higher requirements are imposed on the processing capability, stability, reliability, security, extensibility, manageability and the like of the device; and
(5) another electronic device having the data interaction function.

Theretofore, the specific embodiments of the subject have been described. Other embodiments fall within the scope defined by the appended claims. In some cases, the actions or operations disclosed in the claims may be performed in different sequences, and an expected result is still attainable. In addition, illustrations in the drawings do not necessarily require a specific sequence or a continuous sequence, to attain the expected result. In some embodiments, multi-task processing and parallel processing may be favorable.

In the 1990s, with respect to an improvement of a technology, it may be obviously distinguished whether the improvement is made to the hardware (for example, improvement of a diode, a transistor, a switch and the like circuit structure) or to the software (for example, improvement on the method process). However, with the development of technologies, at present improvements made to many method processes have been deemed as direct improvements of the hardware circuit structure. The designers all obtain the corresponding hardware circuit structures by programming the improved method processes to the hardware circuits. Therefore, the improvement of a method process may also be implemented by a hardware entity module. For example, the programmable logic device (PLD), for example, the field programmable gate array (FPGA), is such an integrated circuit, and the logical functions thereof are determined by programming by the user to the device. The designers generally conduct the programming by themselves to "integrate" a digital system on a PLD, with no need to request the chip manufacturer to design and fabricate a dedicated integrated circuit chip. In addition, at present, the manual fabrication of the integrated circuit chip has not been used, and thus such programming may be implemented by using ("logic compiler") software instead, which is similar to the software compiler used for drafting of the program. The compilation of the original code also needs the specific programming language, which is referred to as Hardware Description Language (HDL). However, there are a variety of HDLs, for example, Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, Ruby Hardware Description Language (RHDL) and the like. The currently prevailing languages are Very-High-Speed Integrated Circuit Hardware Description Language (VHDL) and Verilog. A person skilled in the art also clear that the hardware circuit of the logic method process may be easily implemented only by logic programming the method process using the above hardware description languages, and the hardware description languages are programmed into the integrated circuit.

The controller may be practiced in various suitable ways. For example, the controller may be implemented in the form of a micro-computer or processor, a computer readable media storing computer readable program code, for example, software or firmware, which is executable by the (micro) processor, a logic gate, a switch, an application specific integrated circuit (ASIC), a programmable logical controller or an embedded micro-controller. Examples of the controller may include, but not limited to, the following micro-controllers: ARC 625D, Atmel AT91SAM, Microchip PIC18F26K20 and Silicone Labs C8051F320; and the memory controller may be implemented as a portion of the control logic of the memory. A person skilled in the art knows that the methods and steps may completely perform logic programming in the form of a logic gate, switch, application specific integrated circuit, programmable logic controller and embedded micro-controller to implement the same function in addition to implementing the controller by using a pure computer readable program code. Therefore, such controller is deemed as a hardware component, and a device for implementing various functions which is included in the controller may also be deemed as an inner structure of the hardware component. Or even, the device for implementing various functions may be deemed as a software module for implementing the methods, and deemed as an inner structure of the hardware component either.

Systems, apparatuses, modules, or units illustrated in the above embodiments may be specifically implemented by using computer core or entity, or may be implemented by using products having specific functions. A typical device for practicing the technical solutions of the present disclosure is a computer. Specifically, the computer may be specifically a personal computer, a laptop computer, a cellular phone, a camera phone, a smart phone, a personal digital assistant, a medium player, a navigation device, an electronic mail receiving and sending device, a game console, a tablet computer, a wearable device or any combination of these devices.

For ease of description, in the description, the apparatuses are divided into various units according to function for separate description. Nevertheless, the function of each unit is implemented in the same or a plurality of software and/hardware when the present disclosure is practiced.

Those skilled in the art shall understand that the embodiments of the present disclosure may be described as illustrating methods, systems, or computer program products. Therefore, hardware embodiments, software embodiments, or hardware-plus-software embodiments may be used to illustrate the present disclosure. In addition, the present disclosure may further employ a computer program product which may be implemented by at least one non-transitory computer-readable storage medium with an executable program code stored thereon. The non-transitory computer-readable storage medium includes but not limited to a disk memory, a CD-ROM, and an optical memory.

The present disclosure is described based on the flowcharts and/or block diagrams of the method, device (system), and computer program product. It should be understood that each process and/or block in the flowcharts and/or block diagrams, and any combination of the processes and/or blocks in the flowcharts and/or block diagrams may be implemented using computer program instructions. These computer program instructions may be issued to a computer, a dedicated computer, an embedded processor, or processors of other programmable data processing device to generate a machine, which enables the computer or the processors of other programmable data processing devices to execute the instructions to implement an apparatus for implementing specific functions in at least one process in the flowcharts and/or at least one block in the block diagrams.

These computer program instructions may also be stored in a computer-readable memory capable of causing a computer or other programmable data processing devices to work in a specific mode, such that the instructions stored on the non-transitory computer-readable memory implement a product including an instruction apparatus. The instruction apparatus implements specific functions in at least one process in the flowcharts and/or at least one block in the block diagrams.

These computer program instructions may also be stored on a computer or other programmable data processing devices, such that the computer or the other programmable data processing devices execute a series of operations or steps to implement processing of the computer. In this way, the instructions, when executed on the computer or the other programmable data processing devices, implement the specific functions in at least one process in the flowcharts and/or at least one block in the block diagrams.

In a typical configuration, a computing device includes one or more central processing units (CPUs), input/output (I/O) interfaces, network interfaces, and memories.

The memory may include such computer-readable medium as a volatile memory, a random access memory (RAM) and/or other forms of nonvolatile memories, such as a read-only memory (ROM) or a flash memory (flash RAM). An example of the computer-readable medium is the memory.

The computer-readable mediums include permanent and non-permanent mediums, and removable and non-removable mediums, which may implement information storage by using any method or technology. The information may be computer-readable instructions, data structures, program modules or other data. Examples of computer storage mediums include, but are not limited to, a phase change random access memory (PRAM), a static random access memory (SRAM), a dynamic random access memory (DRAM), other types of random access memories (RAMs), a ROM, an electrically erasable programmable read-only memory (EEPROM), a flash memory or other memory technologies, compact disc read-only memory (CD-ROM), a digital versatile disk (DVD) or other optical storage devices, a magnetic cassette, a magnetic tape magnetic disk storage device or other magnetic storage devices, or any other non-transmission mediums, which may be used to store information that can be accessed by a computing device. According to the definition in this specification, the computer-readable medium does not include a transitory computer-readable medium, such as modulated data signals and carriers.

It should be noted that, in this specification, terms "comprises", "comprising"or any other variation thereof, are intended to cover a non-exclusive inclusion, such that a process, method, article, or apparatus, that contains a list of elements does not include only those elements but may include other elements not expressly listed or inherent to such process, method, article, or apparatus. On the premise of no more limitations, an element proceeded by "comprises...a", "has...a", "includes...a", "contains...a" does not, without more constraints, preclude the existence of additional identical elements in the process, method, article, or device.

Those skilled in the art shall understand that the embodiments of the present disclosure may be described as illustrating methods, systems, or computer program products. Therefore, hardware embodiments, software embodiments, or hardware-plus-software embodiments may be used to illustrate the present disclosure. In addition, the present disclosure may further employ a computer program product which may be implemented by at least one non-transitory computer-readable storage medium with an executable program code stored thereon. The non-transitory computer-readable storage medium includes but not limited to a disk memory, a CD-ROM, and an optical memory.

The present disclosure may be described in the general context of the computer-executable instructions executed by the computer, for example, a program module. Generally, the program module includes a routine, program, object, component or data structure for executing specific tasks or implementing specific abstract data types. The present disclosure may also be practiced in the distributed computer environments. In such distributed computer environments, the tasks are executed by a remote device connected via a communication network. In the distributed computer environments, the program module may be located in the native and remote computer storage medium including the storage device.

Detailed above are exemplary embodiments of the present disclosure, and are not intended to limit the present disclosure. For a person skilled in the art, the present disclosure may be subject to various modifications and variations. Any modification, equivalent replacement, or improvement made without departing from the spirit and principle of the present disclosure should fall within the protection scope of the present disclosure.

## Claims

1. A method for manufacturing leads in a touch screen, comprising:
integrally printing a region where an ITO channel pattern lead of the touch screen is disposed; and
lasering, by a laser process, the integrally printed region to form at least one of a sensing channel lead or a drive channel lead with a wiring width less than a predetermined threshold, the predetermined threshold being defined according to a minimum value achievable by the laser process.

2. The method according to claim 1, wherein the integrally printing a region where an ITO channel pattern lead of the touch screen is disposed comprises:
integrally printing the region where the ITO channel pattern lead of the touch screen is disposed by using a silver paste.

3. The method according to claim 2, wherein the lasering, by a laser process, the integrally printed region to form at least one of a sensing channel lead or a drive channel lead with a wiring width less than a predetermined threshold, the predetermined threshold being defined according to the minimum value achievable by the laser process, comprises:
lasering, by using a first predetermined laser pattern, the integrally printed region to form the at least one of the sensing channel lead or the drive channel lead with the wiring width less than the predetermined threshold, the predetermined threshold being defined according to the minimum value achievable by the laser process.

4. The method according to any one of claims 1 to 3, wherein the lasering, by a laser process, the integrally printed region to form at least one of a sensing channel lead or a drive channel lead with the wiring width less than the predetermined threshold, the predetermined threshold being defined according to the minimum value achievable by the laser process, further comprises:
breaking excess metal blocks generated by the integral printing, and separating the broken metal blocks from a region where the at least one of the sensing channel lead or the drive channel lead is disposed.

5. The method according to claim 4, wherein the breaking the excess metal blocks generated by the integral printing, and separating the broken metal blocks from a region where the at least one of the sensing channel lead or the drive channel lead is disposed comprises:
breaking, by using a second predetermined laser pattern, the excess metal blocks generated by the integral printing, and separating the broken metal blocks from the region where the at least one of the sensing channel lead or the drive channel lead is disposed.

6. The method according to claim 1, wherein the predetermined threshold is 0.1 mm.

7. A touch screen, comprising at least one of a sensing channel lead or a drive channel lead configured to transmit a touch position signal, wherein the at least one of the sensing channel lead or the drive channel lead is at least one of a sensing channel lead or a drive channel lead with a wiring width less than a predetermined threshold, the at least one of the sensing channel lead or the drive channel lead with the wiring width less than the predetermined threshold is formed by integrally printing a region where an ITO channel pattern lead of the touch screen is disposed and lasering the integrally printed region by a laser process, the predetermined threshold being defined according to a minimum value achievable by the laser process.

8. The touch screen according to claim 7, wherein the integrally printing a region where an ITO channel pattern lead of the touch screen is disposed comprises: integrally printing the region where the ITO channel pattern lead of the touch screen is disposed by using a silver paste.

9. The touch screen according to claim 8, wherein the lasering the integrally printed region by a laser process, to form at least one of a sensing channel lead or a drive channel lead with a wiring width less than a predetermined threshold, the predetermined threshold being defined according to the minimum value achievable by the laser process, comprises:
lasering the integrally printed region by using a first predetermined laser pattern, to form the at least one of the sensing channel lead or the drive channel lead with the wiring width less than the predetermined threshold, the predetermined threshold being defined according to the minimum value achievable by the laser process.

10. The touch screen according to any one of claims 7 to 9, wherein the lasering the integrally printed region by a laser process, to form at least one of a sensing channel lead or a drive channel lead with the wiring width less than a predetermined threshold, the predetermined threshold being defined according to the minimum value achievable by the laser process, further comprises:
breaking excess metal blocks generated by the integral printing, and separating the broken metal blocks from a region where the at least one of the sensing channel lead or the drive channel lead is disposed.

11. The touch screen according to claim 10, wherein the breaking the excess metal blocks generated by the integral printing, and separating the broken metal blocks from a region where the at least one of the sensing channel lead or the drive channel lead is disposed comprises:
breaking, by using a second predetermined laser pattern, the excess metal blocks generated by the integral printing, and separating the broken metal blocks from the region where the at least one of the sensing channel lead or the drive channel lead is disposed.

12. The touch screen according to claim 7, wherein the predetermined threshold is 0.1 mm.

13. An electronic device, comprising the touch screen according to claims 7 to 12.
